# EUROPEAN PATENT SPECIFICATION

(11) **EP 3 644 294 B1**
(45) Date of publication and mention of the grant of the patent: **01.03.2023**
(21) Application number: 17914903.4
(22) Date of filing: 22.06.2017
(51) Int. Cl.: G08G 1/00, G08G 1/09, B60W 40/06

(54) **VEHICLE INFORMATION STORAGE METHOD, VEHICLE TRAVEL CONTROL METHOD, AND VEHICLE INFORMATION STORAGE DEVICE**
FAHRZEUGINFORMATIONSPEICHERVERFAHREN, FAHRZEUGFAHRSTEUERUNGSVERFAHREN UND FAHRZEUGINFORMATIONSPEICHERVORRICHTUNG
PROCÉDÉ ET DISPOSITIF DE STOCKAGE D'INFORMATIONS DE VÉHICULE, ET PROCÉDÉ DE COMMANDE DE DÉPLACEMENT DE VÉHICULE

(43) Date of publication of application: 29.04.2020
(73) Proprietor: Nissan Motor Co., Ltd., Yokohama-shi, Kanagawa 221-0023 (JP)
(72) Inventor: KOJO, Naoki, Atsugi-shi, Kanagawa 243-0123 (JP); AOKI, Motonobu, Atsugi-shi, Kanagawa 243-0123 (JP); YANAGI, Takura, Atsugi-shi, Kanagawa 243-0123 (JP)
(74) Representative: Grünecker Patent- und Rechtsanwälte PartG mbB
(86) International application number: PCT/JP2017/023074
(87) International publication number: WO 2018/235239

(56) References cited:
- DE-A1-102015 013 802
- DE-B3-102014 014 293
- JP-A- 2008 001 302
- JP-A- 2012 218 548
- JP-A- 2015 204 097
- KR-A- 20150 062 267
- KR-A- 20160 050 736
- US-A1- 2015 046 084
- US-A1- 2015 291 177

## Description

The present invention relates to a method of storing information for a vehicle, a method of controlling travel of a vehicle, and an apparatus for storing information for a vehicle.

A navigation update device and a navigation update method are known, in which vehicle traveling data is measured, occurrence of disturbances acting on the front and rear wheels is monitored in the vehicle traveling data, the presence or absence of a speed bump is determined from the result of monitoring, positional information of the speed bump is calculated, and the calculated positional information of the speed bump is updated (Patent Document 1: JP2015-204097A).
US 2015/291177 A1 describes an in-vehicle device to detect speed bumps in accordance with disturbances of the front and rear wheels. The device determines the time difference between the detection of a disturbance in the front wheels and the rear wheels. From the time difference, a determination is made whether the disturbances in the front and rear wheels are correlated. The determination is made by calculating a "movement distance" from the time difference and the vehicle speed. In case the movement distance corresponds to the wheelbase of the vehicle, a speed bump is detected.

US 2015/046084 A1 discloses a vehicle mounted device that detects speed bumps. Speed bumps are detected using a Lidar sensor. According to the detected size of the speed bump, a recommended traveling speed is calculated. In case the current speed exceeds the recommended speed, a warning message is displayed.
KR 2015 0062267 A discloses a method to control the dampers of a vehicle. The dampers are controlled in accordance with a detected speed bump. Speed bumps are detected according to the movement of the damper and the vertical acceleration of the vehicle body. It is sufficient that one wheel drives over a speed bump to detect the speed bump.

Speed bumps include sharp ones and long ones, for example, and there are various forms of speed bumps. Accordingly, the driving when passing over speed bumps differs depending on the forms of the speed bumps. The prior art involves a problem in that appropriate driving cannot be performed in accordance with the forms of speed bumps because only the positional information of speed bumps is updated.

A problem to be solved by the present invention is to provide a method and an apparatus for storing information for a vehicle with which appropriate driving can be performed in accordance with the forms of speed bumps and also to provide a method of controlling travel of a vehicle using the information.

This is achieved by the features of claim 1 for a method of storing information, by the features of claim 13 for a method of controlling travel and by the features of claim 14 for an apparatus for storing information.

According to the present invention, the positional information of a speed bump and the vehicle speed information when passing over the speed bump are stored as the speed bump information, and appropriate driving can therefore be performed using the speed bump information in accordance with the form of the speed bump.

### [Brief Description of Drawings]

FIG 1 is a diagram illustrating the block configuration of a driving knowledge extraction system of a first embodiment.
FIG 2 is a flowchart illustrating a control procedure executed by the driving knowledge extraction system of the first embodiment.
FIG 3 is a diagram illustrating the block configuration of a vehicle travel control system of a second embodiment.
FIG 4 is a flowchart illustrating a control procedure executed by the vehicle travel control system of the second embodiment.

### [Mode(s) for Carrying out the Invention]

Hereinafter, embodiments of the present invention will be described with reference to the drawings.

### «First Embodiment»

In the present embodiment, an exemplary case will be described in which the apparatus for storing information for a vehicle according to the present invention is applied to a driving knowledge extraction system configured such that a server 100 cooperates with an onboard apparatus 200 equipped in a vehicle.

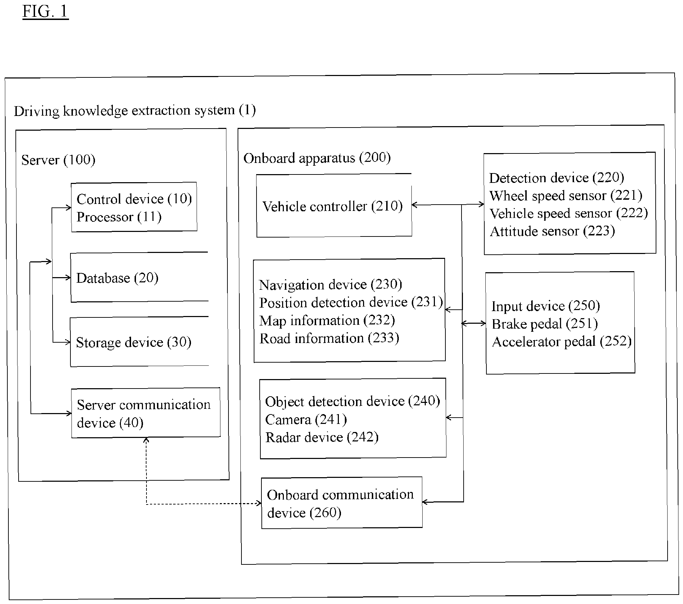

FIG. 1 is a diagram illustrating the block configuration of a driving knowledge extraction system 1. The driving knowledge extraction system 1 of the present embodiment includes the server 100 and the onboard apparatus 200. The driving knowledge extraction system 1, the server 100, the onboard apparatus 200, and various devices included therein may each be a computer that includes an arithmetic processing unit, such as one or more CPUs, and executes arithmetic processing.

The onboard apparatus 200 will be described first.

The onboard apparatus 200 of the present embodiment includes a vehicle controller 210, a detection device 220, a navigation device 230, an object detection device 240, an input device 250, and an onboard communication device 260. These devices which constitute the onboard apparatus 200 are connected to one another via a controller area network (CAN) or other onboard LAN to mutually exchange information.

The vehicle controller 210 of the present embodiment is an onboard computer such as an electronic control unit (ECU). The vehicle may be, for example, an electric car having an electric motor as the travel driving source, an engine car having an internal-combustion engine as the travel driving source, or a hybrid car having both an electric motor and an internal-combustion engine as the travel driving sources. Examples of the electric car or hybrid car having an electric motor as the travel driving source include those of a type in which the power source for the electric motor is a secondary battery and a type in which the power source for the electric motor is a fuel cell.

The vehicle controller 210 executes a speed bump passage information calculation process as a process of calculating information regarding a speed bump which the vehicle has passed over (also referred to as "speed bump passage information," hereinafter). The speed bump passage information calculation process will be described later.

The vehicle controller 210 of the present embodiment is provided with the detection device 220. The detection device 220 includes a wheel speed sensor 221, a vehicle speed sensor 222, and an attitude sensor 223. The wheel speed sensor 221, which is provided for each wheel of the vehicle, detects the rotation speed of the wheel and outputs the detected rotation speed to the vehicle controller 210. The vehicle speed sensor 222 detects the speed and/or acceleration of the vehicle and outputs the detected speed and/or acceleration to the vehicle controller 210. The directions of the speed and/or acceleration detected by the vehicle speed sensor 222 are not limited to the traveling direction of the vehicle and include the vertical direction of the vehicle. The attitude sensor 223 detects the position of the vehicle (including the height of the vehicle), the pitch angle of the vehicle, the yaw angle of the vehicle, and the roll angle of the vehicle and outputs them to the vehicle controller 210. An example of the attitude sensor 223 may be an inertial measurement unit (IMU) such as a gyro sensor.

The onboard apparatus 200 of the present embodiment includes the navigation device 230. The navigation device 230 calculates a route from the current position of the subject vehicle to a destination. The scheme of calculating the route may be a known scheme at the time of filing this application based on a graph search algorithm, such as Dijkstra's algorithm or A* search algorithm. The calculated route is transmitted to the vehicle controller 210.

The navigation device 230 includes a position detection device 231. The position detection device 231 is responsible to the Global Positioning System (GPS) and detects a traveling position (latitude/longitude) of the vehicle traveling. Another example of the position detection device 231 is an inertial navigation system (INS). The INS includes a gyro sensor and an acceleration sensor, calculates a speed by integrating the acceleration, calculates a distance by integrating the speed, and detects a moving direction using the gyro sensor. The INS calculates the moving distance from a given start point on the basis of the calculation results and the detected direction.

The position detection device 231 is not limited to any one of the above-described devices and may also be a device that is adapted, for example, to the GPS and the INS. In this case, the position detection device 231 can accurately calculate the traveling position of the vehicle from the traveling position of the vehicle, which is an absolute position detected using the GPS, and the relative moving distance of the vehicle calculated by the INS. The position detection device 231 can detect the traveling position of the vehicle, for example, in units of about several tens of centimeters. The present embodiment will be described on the assumption that the position detection device 231 is a device that is adapted to the GPS and the INS.

Methods of detecting the traveling position of the subject vehicle are not limited to a method of using the detection result from the position detection device 231 without any modification. For example, an omnidirectional sensor may be used as the position detection device 231. The omnidirectional sensor is provided, for example, at a predetermined site of the vehicle from which the surroundings of the vehicle can be viewed, and scans all the surrounding directions of the vehicle thereby to generate a three-dimensional image diagram that represents all the surrounding directions of the vehicle. The traveling position of the vehicle can be detected by executing a map matching process using the generated image diagram and map information 232, which will be described below.

The navigation device 230 includes accessible map information 232 and road information 233. It suffices that the map information 232 and the road information 233 can be read by the navigation device 230. The map information 232 and the road information 233 may be stored in a database configured to be physically separated from the navigation device 230 or may also be stored in the server 100 from which the stored information is readable via the onboard communication device 260.

The map information 232 is a so-called electronic map that represents information in which the latitude and longitude are associated with the map information. The map information 232 has the road information 233 which is associated with each point.

The road information 233 is defined by nodes and links connecting between the nodes. The road information 233 includes information for specifying a road by a position/region of the road, information on the road type and road width of each road, information on the shape of a road, and information on the legal speed on a road. The road information 233 is stored such that identification information of each road link is associated with the position of an intersection, the entering direction into the intersection, the type of the intersection, and other information regarding the intersection. Additionally or alternatively, the road information 233 may be stored such that the identification information of each road link is associated with the road type, the road width, the road shape, whether or not the straight-ahead traveling is permitted, the priority relationship in traveling, whether or not the overtaking is permitted (whether or not the lane change to an adjacent lane is permitted), the position of a road boundary line, the position of a stop line, and other information regarding the road.

When the onboard apparatus 200 is equipped in a vehicle that travels by an autonomous driving operation (autonomous or automated driving) rather than by the driver's driving operation, the road information 233 is preferably stored as highly accurate road information. In this case, the vehicle can travel on the basis of the map information 232 which is high-definition map information. The present embodiment will be described on the assumption that the map information 232 is high-definition map information.

The navigation device 230 specifies a travel route along which the subject vehicle travels, on the basis of the current position of the subject vehicle detected by the position detection device 231. The travel route is a planned travel route for the subject vehicle and/or a travel route along which the subject vehicle has actually traveled. The travel route may also be a route to a destination designated by the user or a route to a destination estimated on the basis of the travel history of the subject vehicle/user. The travel route along which the subject vehicle travels may be specified for each road, specified for each road on which the inbound/outbound direction is designated, or specified for each single lane in which the subject vehicle actually travels. The navigation device 230 refers to the road information 233 to specify the road link for each lane of the travel route along which the subject vehicle travels.

The travel route includes specifying information (coordinate information) for one or more points through which the subject vehicle will travel in the future. The travel route includes at least a point that suggests the next traveling position at which the subject vehicle travels. The travel route may be composed of a continuous line or may also be composed of discrete points. Although not particularly limited, the travel route is specified by a road identifier, a lane identifier, and/or a link identifier. These road identifier, lane identifier, and link identifier are defined in the map information 232 and/or the road information 233.

The onboard apparatus 200 includes the object detection device 240. The object detection device 240 detects the situation around the subject vehicle. The object detection device 240 of the subject vehicle detects the existence and existing positions of objects including obstacles that may exist around the subject vehicle. Although not particularly limited, the object detection device 240 includes a camera 241. The camera 241 is, for example, an imaging device including an imaging element such as a CCD. The camera 241 may also be an infrared camera or a stereo camera. The camera 241 is disposed at a certain position of the subject vehicle and captures images of objects around the subject vehicle. The term "around the subject vehicle" as used herein encompasses the concepts of "ahead of the subject vehicle," "behind the subject vehicle," "laterally to the subject vehicle on the left side," and "laterally to the subject vehicle on the right side." Objects include two-dimensional signs such as stop lines or lane boundary lines painted on the road surface. Objects include three-dimensional physical objects. Objects include stationary objects such as traffic signs. Objects include moving physical objects such as pedestrians, two-wheel vehicles, and four-wheel vehicles (other vehicles). Objects include road structures such as guardrails, median strips, and curbstones.

The object detection device 240 may analyze the image data and identify the type of an object on the basis of the analysis result. The object detection device 240 uses a pattern matching technique or other similar technique to identify whether or not the object included in the image data is a vehicle, a pedestrian, a traffic sign, or a two-dimensional sign painted on the road surface. The object detection device 240 processes the obtained image data to acquire the distance from the subject vehicle to an object existing around the subject vehicle on the basis of the position of the object. In particular, the object detection device 240 acquires the positional relationship between the object and the subject vehicle.

A radar device 242 may be used as the object detection device 240. Examples of the radar device 242 for use include those, such as millimeter-wave radar, laser radar, ultrasonic radar, and laser range finder, which are of the schemes known at the time of filing this application. The object detection device 240 detects the presence or absence of objects, positions of the objects, distances to the objects, and relative speeds of the objects to the subject vehicle on the basis of the received signals from the radar device 242. The object detection device 240 may detect the presence or absence of objects, positions of the objects, distances to the objects, and relative speeds of the objects to the subject vehicle on the basis of clustering results of point cloud information which is acquired using the laser radar.

When another vehicle and the subject vehicle are capable of vehicle-to-vehicle communication, the object detection device 240 may acquire the vehicle speed and acceleration of the other vehicle, which are detected by the vehicle speed sensor of the other vehicle, and/or the fact that the other vehicle is present, as object information. Additionally or alternatively, the object detection device 240 can acquire the object information, which includes the position, speed, and acceleration of another vehicle, from external devices of the Intelligent Transport Systems (ITS).

The input device 250 of the present embodiment includes a brake pedal 251 and an accelerator pedal 252. When the driver steps on the brake pedal 251, for example, the brake pedal 251 outputs, to the vehicle controller 210, a signal indicating that a brake operation is performed and a signal indicating the amount of depression of the pedal. Likewise, when the driver steps on the accelerator pedal 252, for example, the accelerator pedal 252 outputs, to the vehicle controller 210, a signal indicating that an accelerator operation is performed and a signal indicating the amount of depression of the pedal.

The onboard communication device 260 of the present embodiment can communicate with a server communication device 40 of the server 100 via a telephone line network or other similar network. The onboard communication device 260 transmits the speed bump passage information, which is acquired from the vehicle controller 210, to the server communication device 40, receives information from the server communication device 40, and outputs the received information to the vehicle controller 210. Examples of the onboard communication device 260 include a device having a 4G LTE mobile communication function and a device having a WiFi communication function.

The timing when the onboard communication device 260 performs transmission/reception with the server communication device 40 is not particularly limited. For example, when the onboard communication device 260 can constantly communicate with the server communication device 40 via 4G LTE, the onboard communication device 260 may constantly exchange information with the server communication device 40. Additionally or alternatively, when the onboard communication device 260 can intermittently communicate with the server communication device 40 via WiFi connection, for example, the onboard communication device 260 may exchange information with the server communication device 40 at the timing when the onboard communication device 260 can communicate with the server communication device 40. In this case, the onboard communication device 260 temporarily stores the information, which is input from the vehicle controller 210, in an external or built-in storage device (e.g., HDD). Then, the onboard communication device 260 reads the information from the storage device and transmits the information to the server communication device 40 at the timing when communication with the server communication device 40 is possible.

The speed bump passage information calculation process executed by the vehicle controller 210 will then be described.

The vehicle controller 210 is a computing device that calculates information regarding a speed bump. Specifically the vehicle controller 210 is a computer including a read only memory (ROM) that stores a program for executing the speed bump passage information calculation process, a central processing unit (CPU) as an operation circuit that runs the program stored in the ROM to execute the speed bump passage information calculation process, and a random access memory (RAM) that serves as an accessible storage device.

Specifically, the vehicle controller 210 of the present embodiment executes the following processes to calculate the speed bump passage information. The vehicle controller 210 executes a speed bump determination process of determining whether or not the subject vehicle has passed over a speed bump, a vehicle position detection process of detecting the position of the subject vehicle on a map, an object determination process of determining whether or not an object existing around the subject vehicle affects the speed of the vehicle, and a speed bump passage information calculation process of generating speed bump passage information from the results of the above three processes.

The vehicle controller 210 executes each of the above functions by cooperation of software for realizing each function or for executing each process and the above-described hardware.

The speed bump determination process will be described first.

The vehicle controller 210 determines whether or not the subject vehicle has passed over a speed bump, on the basis of the detection result from the detection device 220. When the vehicle passes over a speed bump, a disturbance acts on the vehicle. Specifically, when the vehicle passes over a speed bump, the traveling state of the vehicle (e.g., the speed/acceleration, the wheel rotation speed, the vehicle attitude including the vehicle height, etc.) changes between before and after the vehicle passes over the speed bump. The disturbance in the present embodiment refers to a disturbance to a state in which the vehicle is traveling in an area without speed bumps. The vehicle controller 210 determines whether or not the vehicle has passed over a speed bump, using the disturbance acting on the subject vehicle as a trigger.

For example, the vehicle controller 210 monitors the rotation speed of each wheel detected by the wheel speed sensor 221 and, when the amount of change in the rotation speed of a front wheel is not less than a predetermined threshold, the vehicle controller 210 determines that a disturbance acts on the front wheel. The vehicle controller 210 starts calculation of the moving distance of the subject vehicle by integrating the speed of the subject vehicle from the position at which a determination is made that a disturbance acts on a front wheel. Then, when the amount of change in the rotation speed of a rear wheel is not less than the predetermined threshold, the vehicle controller 210 determines that a disturbance acts on the rear wheel, and ends the calculation of the moving distance of the subject vehicle. When the amount of change in the rotation speed of each of the front and rear wheels is less than the predetermined threshold, the vehicle controller 210 determines that no disturbance acts on the front and rear wheels. The predetermined threshold is a value that is obtained experimentally.

In addition, the vehicle controller 210 ends the calculation of the moving distance of the subject vehicle and compares the calculated moving distance of the subject vehicle with the wheelbase of the subject vehicle thereby to determine whether or not the subject vehicle has passed over the speed bump at the time point when the disturbance acts on the rear wheel. Specifically, when the difference between the calculated moving distance of the subject vehicle and the wheelbase of the subject vehicle is not more than a predetermined threshold, the vehicle controller 210 determines that the subject vehicle has passed over the speed bump. On the other hand, when the difference is more than the predetermined threshold, the vehicle controller 210 determines that the subject vehicle has not passed over the speed bump. This determination method is based on the viewpoint that when the vehicle passes over a speed bump, the moving distance of the vehicle becomes short. The wheelbase of the subject vehicle is the distance between the front wheels and the rear wheels. Information on the wheelbase is preliminarily stored in a ROM or the like. The predetermined threshold is a value that is obtained experimentally.

Methods of detecting a disturbance acting on the vehicle are not limited to the method of using the detection result from the wheel speed sensor. For example, the vehicle controller 210 may use the upward acceleration or downward acceleration included in the detection result from the vehicle speed sensor 222. In this case, for example, when the amount of change in the upward acceleration is not less than a predetermined threshold, the vehicle controller 210 determines that a disturbance acts on a front wheel. Then, after detecting the disturbance acting on the front wheel, when the amount of change in the upward acceleration is not less than the predetermined threshold, the vehicle controller 210 determines that a disturbance acts on a rear wheel. When the amount of change in the upward acceleration is less than the predetermined threshold, the vehicle controller 210 determines that no disturbance acts on the front and rear wheels. Additionally or alternatively, for example, the vehicle controller 210 may use the height of the subject vehicle included in the detection result from the attitude sensor 223. In this case, the method of determining the occurrence of a disturbance is the same as the above-described determination method using the upward acceleration or the downward acceleration, and the description thereof will be borrowed herein.

Here, the accuracy of speed bump detection based on a disturbance acting on the front and rear wheels will be described with reference to a vehicle controller according to a comparative example. This vehicle controller according to the comparative example performs the detection of a speed bump only on the basis of a disturbance acting on the front and rear wheels. It is assumed that the method of detecting a speed bump is the same as that in the above-described vehicle controller of the present embodiment. In this case, the accuracy of speed bump detection by the controller of the comparative example is not high, so the following erroneous determination may occur.

For example, when the vehicle passes over a road depression, the controller of the comparative example detects the amount of change in the rotation speed of a front wheel and the amount of change in the rotation speed of a rear wheel. Then, when the difference between the distance from the position at which the disturbance acting on the front wheel is detected to the position at which the disturbance acting on the rear wheel is detected and the wheelbase of the subject vehicle is not more than a predetermined threshold, the controller of the comparative example erroneously determines that the vehicle has passed over a speed bump. That is, a determination cannot be made to clearly distinguish between a speed bump and a road depression or a fallen object existing on the road merely by detecting a disturbance acting on a front wheel and a disturbance acting on a rear wheel. For example, consider a case in which the positional information of a speed bump detected by the controller of the comparative example is applied to a vehicle driving in an autonomous manner. In this case, the vehicle may decelerate in response to a road depression that does not require the vehicle to decelerate. Also in a scene in which it is better to travel while avoiding a fallen object, the vehicle may decelerate without avoiding the fallen object. It is thus difficult to apply the result of speed bump detection to the driving technique for a vehicle driving in an autonomous manner because the detection accuracy is low in the speed bump detection method based only on the disturbance acting on the front and rear wheels.

In contrast, the vehicle controller 210 of the present embodiment executes the following process and can thereby detect a speed bump with a high degree of accuracy when the above-described method makes a determination that the vehicle has passed over the speed bump. In the following description, what is detected as a speed bump by the above-described method will be referred to as a "speed bump candidate," and highly accurate speed bump detection methods will be described below.

A speed bump detection method based on a disturbance acting on the right and left wheels will be described first.

The vehicle controller 210 determines whether or not the speed bump candidate is a speed bump, on the basis of the disturbance acting on the right and left wheels. After detecting the speed bump candidate, the vehicle controller 210 determines whether or not the speed bump candidate is a speed bump, in accordance with the difference between the amount of change in the rotation speed of the left wheel and the amount of change in the rotation speed of the right wheel.

As described above, the vehicle controller 210 monitors the rotation speeds of the right and left wheels when detecting a speed bump candidate. For example, upon the detection of a speed bump candidate, the vehicle controller 210 calculates the differences between the rotation speeds of the right and left wheels at the time point when a disturbance acts on a front wheel and the rotation speeds of the right and left wheels at the time point when a disturbance acts on a rear wheel. Through this operation, the vehicle controller 210 calculates the amount of change in the rotation speed of the left wheel and the amount of change in the rotation speed of the right wheel. Then, when the difference between the amount of change in the rotation speed of the left wheel and the amount of change in the rotation speed of the right wheel is not more than a predetermined threshold, the vehicle controller 210 determines the speed bump candidate as a speed bump. On the other hand, when the difference is more than the predetermined threshold, the vehicle controller 210 does not determine the speed bump candidate as a speed bump. This determination method is based on the viewpoint that the disturbance acting on the right and left wheels of the vehicle differs between when the vehicle passes over a speed bump and when the vehicle passes over a road depression or a fallen object existing on the road. In the present embodiment, the above determination method makes it possible to distinguish between a road depression or a fallen object and a speed bump. The predetermined threshold is a value that is obtained experimentally.

Another speed bump detection method will then be described, which is based on the vehicle speed before and after passing over a speed bump candidate.

The vehicle controller 210 monitors the vehicle speed which is input from the vehicle speed sensor 222. After detecting a speed bump candidate, the vehicle controller 210 determines whether or not the speed bump candidate is a speed bump, in accordance with the vehicle speed before and after passing over the speed bump candidate.

For example, upon the detection of a speed bump candidate, when the vehicle speed is slower than a predetermined threshold in two ranges: a predetermined range located behind a position at which the disturbance acts on a front wheel; and a predetermined range located ahead of a position at which the disturbance acts on a rear wheel, the vehicle controller 210 determines the speed bump candidate as a speed bump. On the other hand, when the vehicle speed is faster than the predetermined threshold in any one of the two ranges or both in the two ranges, the vehicle controller 210 does not determine the speed bump candidate as a speed bump. This determination method is based on the viewpoint that a speed bump prompts deceleration while a step as a road joint or an obstacle does not prompt deceleration. In the present embodiment, the above determination method makes it possible to distinguish between a road step or an obstacle and a speed bump. An example of the predetermined ranges may be a range for several vehicles. The vehicle controller 210 temporarily stores the vehicle speed information in a storage medium such as a RAM in terms of the predetermined ranges and can thereby acquire the vehicle speed before passing over the speed bump candidate. The predetermined threshold is a value that is obtained experimentally.

Still another speed bump detection method will then be described, which is based on the brake operation before passing over a speed bump candidate and the accelerator operation after passing over the speed bump candidate.

The vehicle controller 210 monitors a brake operation signal from the brake pedal 251 and an accelerator operation signal from the accelerator pedal 252. After detecting a speed bump candidate, the vehicle controller 210 determines whether or not the speed bump candidate is a speed bump, in accordance with a brake operation before passing over the speed bump candidate and an accelerator operation after passing over the speed bump candidate.

For example, upon the detection of a speed bump candidate, when a brake operation is detected in a predetermined range located behind a position at which the disturbance acts on a front wheel or an accelerator operation is detected in a predetermined range located ahead of a position at which the disturbance acts on a rear wheel, the vehicle controller 210 determines the speed bump candidate as a speed bump. On the other hand, when a brake operation is not detected in the predetermined range located behind the position at which the disturbance acts on the front wheel and an accelerator operation is not detected in the predetermined range located ahead of the position at which the disturbance acts on the rear wheel, the vehicle controller 210 does not determine the speed bump candidate as a speed bump. This determination method is based on the same viewpoint as that in the above-described speed bump detection method. An example of the predetermined ranges may be a range for several vehicles. The vehicle controller 210 temporarily stores the brake operation information in a storage medium such as a RAM in terms of the predetermined ranges and can thereby acquire the brake operation before passing over the speed bump candidate.

It is not necessary to use all the above-described three speed bump detection methods, and any one detection method may be selected or two or three detection methods may be combined depending on the load on the arithmetic processing and the arithmetic processing speed.

The vehicle position detection process will then be described.

The vehicle controller 210 detects the position at which the vehicle is traveling, on the basis of the detection result from the position detection device 231. For example, when the position detection device 231 is adapted to the GPS and the INS as in the present embodiment, the vehicle controller 210 can employ the detection result itself of the position detection device 231 as the traveling position of the vehicle. On the other hand, when an omnidirectional sensor is used as the position detection device 231, for example, the vehicle controller 210 executes so-called map matching from the three-dimensional image diagram, which represents all the surrounding directions of the vehicle, and the map information 232 and can thereby detect the traveling position of the vehicle. The processing results obtained by the vehicle position detection process include the traveling position of the vehicle and the lane identifier (road link) of the lane in which the vehicle travels. The vehicle position detection process is not limited to the above-described method, and any vehicle position detection process known at the time of filing this application can be used as appropriate.

The object determination process will then be described.

The vehicle controller 210 determines whether or not an object existing around the vehicle affects the vehicle speed, on the basis of the detection result from the object detection device 240 and the map information 232. For example, the vehicle controller 210 performs the vehicle position detection process to specify the traveling position of the subject vehicle on the map. Then, the vehicle controller 210 acquires the type of the object and the relative position of the object with respect to the subject vehicle from the object detection device 240 and specifies the position of the object on the map. This allows a determination to be made as to whether or not the object is on the same link as that of the lane in which the subject vehicle travels.

Then, the vehicle controller 210 determines whether or not the object affects the vehicle speed of the subject vehicle, in accordance with the position of the object on the map and the type of the object. For example, when detecting a pedestrian present near a crosswalk on the travel route of the subject vehicle, the vehicle controller 210 determines that the object affects the vehicle speed of the subject vehicle.

Additionally or alternatively, when detecting a vehicle that travels on the same link as that of the travel route of the subject vehicle and travels within a predetermined distance ahead of the subject vehicle, the vehicle controller 210 determines that the object affects the vehicle speed of the subject vehicle. In this case, the vehicle controller 210 determines that there is a preceding vehicle that affects the vehicle speed of the subject vehicle. The predetermined distance may be a fixed distance or may also be a distance that varies depending on the vehicle speed of the subject vehicle. For example, the vehicle controller 210 can set the predetermined distance to 100 m when the vehicle speed is 100 km/h and set the predetermined distance to 20 m when the vehicle speed is 20 km/h.

Methods of detecting a preceding vehicle that affects the vehicle speed of the subject vehicle are not limited to the above-described method. For example, when, with reference to the result of the speed bump determination process, an object located within a predetermined distance from the subject vehicle is detected on the same link as that of the travel route of the subject vehicle before passing over a speed bump, the detected object may be determined as a preceding vehicle. This determination method is based on the viewpoint that the scenes of interest are limited to a scene in which the vehicle passes over a speed bump and a determination is made as to whether the object affects the vehicle speed in this scene.

The speed bump passage information calculation process will then be described.

The vehicle controller 210 calculates the speed bump passage information on the basis of respective processing results of the speed bump determination process, the vehicle position detection process, and the object determination process. Specifically, when the object determination process serves to determine that there is no object that affects the vehicle speed of the subject vehicle, the vehicle controller 210 calculates the speed bump passage information from the processing results of the speed bump determination process and the vehicle position detection process. Then, the vehicle controller 210 outputs a traveling history including the calculated speed bump passage information to the onboard communication device 260.

The speed bump passage information includes a vehicle ID for identifying the subject vehicle, the position of a speed bump which the subject vehicle has passed over, information on a link in which the speed bump is located, a vehicle speed at the time point when the subject vehicle has passed over the speed bump, and the vehicle speed, brake operation, and accelerator operation before and after the subject vehicle passes over the speed bump. In other words, in the speed bump passage information, the vehicle ID, position, link, vehicle speed, brake operation, and accelerator operation are associated with one speed bump. The vehicle controller 210 can calculate the information on the link in which the speed bump is located, by associating the traveling position of the subject vehicle when passing over the speed bump with the map information 232.

The timing when the vehicle controller 210 calculates the speed bump passage information is not particularly limited. For example, when detecting one speed bump, the vehicle controller 210 may calculate the speed bump passage information and accumulate the speed bump passage information every time the vehicle passes over a speed bump. Additionally or alternatively, at the time point when the subject vehicle arrives at a predetermined destination, the vehicle controller 210 may calculate the speed bump passage information for all the speed bumps detected so far. In this case, the vehicle controller 210 calculates the speed bump passage information on the basis of the travel history which includes the result of speed bump detection, travel route, vehicle speed, brake operation, and accelerator operation.

The server 100 will then be described.

The server 100 includes a control device 10, a database 20, a storage device 30, and a server communication device 40. The control device 10, the database 20, the storage device 30, and the server communication device 40 can exchange information with one another via a wired or wireless communication line. The server communication device 40 performs information exchange with the onboard apparatus 200, information exchange inside the server 100, and information exchange with the external of the driving knowledge extraction system 1.

The server communication device 40 can communicate with the onboard communication device 260 of the onboard apparatus 200 via a telephone line network. The server communication device 40 receives a plurality of travel histories from a plurality of onboard apparatuses 200 equipped in respective vehicles and outputs the received plurality of travel histories to the control device 10. In addition, the server communication device 40 transmits the speed bump information, which is acquired from the control device 10, to the onboard apparatuses 200. The operation of the server communication device 40 is not limited to receiving the travel histories from a plurality of vehicles, and the server communication device 40 may receive the travel history twice or more from the onboard apparatus 200 equipped in one vehicle.

The database 20 is a database that stores travel histories acquired from one or more vehicles. Each travel history includes the speed bump passage information. The speed bump passage information includes a vehicle ID, a speed bump identification number for identifying a speed bump, positional information of a speed bump associated with the road link, and the vehicle speed information, brake operation, and accelerator operation at the position of a speed bump and around the position. When a plurality of speed bump passage information pieces is acquired from a plurality of vehicles, the speed bump passage information is stored in the database 20 for each vehicle. The database 20 may store the map information 232 and the road information 233 which are included in the onboard apparatus or apparatuses 200. The present embodiment will be described on the assumption that the database 20 stores the map information 232 and the road information 233.

The storage device 30 includes one or more random access memories (RAMs) that serve as an accessible storage device. The control device 10 includes a processor 11, which will be described below. The processor 11 has a speed bump information specifying function. The storage device 30 stores the positional information of a speed bump and the information on the vehicle speed, brake operation, and accelerator operation associated with the position of the speed bump, which are specified from the plurality of speed bump passage information pieces stored in the database 20, as the speed bump information for each speed bump. The positional information of a speed bump is associated with the road link of the road information 233.

The control device 10 will then be described.

The control device 10 includes the processor 11. The processor 11 is a computing device that performs a driving knowledge extraction process. Specifically, the processor 11 is a computer including a read only memory (ROM) that stores a program for executing the driving knowledge extraction process, a central processing unit (CPU) as an operation circuit that runs the program stored in the ROM to execute the driving knowledge extraction process, and a random access memory (RAM) that serves as an accessible storage device.

The processor 11 according to the present embodiment executes a speed bump passage information storage process of storing the speed bump passage information, which is transmitted from the onboard apparatus 200, in the database 20 and a speed bump information specifying process of specifying the speed bump information as driving knowledge.

The processor 11 executes each of the above functions by cooperation of software for realizing each function or for executing each process and the above-described hardware.

The speed bump passage information storage process will be described first.

The processor 11 stores the travel history, which includes the speed bump passage information input from the server communication device 40, in the database 20. When receiving the travel histories from a plurality of vehicles, the processor 11 stores the travel history in the database 20 for each vehicle.

The speed bump information specifying process will then be described.

On the basis of the plurality of speed bump passage information pieces stored in the database 20, the processor 11 specifies the position of a speed bump and the vehicle speed information, the brake operation information, and the accelerator operation information, which are associated with the position of the speed bump, as speed bump information.

First, the processor 11 extracts speed bump passage information including link information of the same lane from among the speed bump passage information pieces stored in the database 20. The link information of a lane is distinguished on the basis of the link identifier defined in the road information 233. For example, the processor 11 extracts the speed bump passage information including the same link identifier from the database 20.

Then, to store the position of a speed bump in the storage device 30 as the driving knowledge, the processor 11 specifies the position of the speed bump from the positional information of the speed bump included in the extracted speed bump passage information. For example, when there is a plurality of positional information pieces of speed bumps included in the extracted speed bump passage information, the processor 11 executes a clustering process. An example of the clustering process is the K-means method. For example, the processor 11 classifies the speed bumps into two or more groups from the coordinates (latitude and longitude) of the plurality of speed bumps. The processor 11 groups the plurality of speed bumps so that distances between the speed bumps fall within a predetermined distance. The predetermined distance is preferably a distance that is obtained experimentally. For example, the predetermined distance may be a distance of about 3 m.

The processor 11 specifies the positions of speed bumps for each group. Methods of specifying the positions of speed bumps are not particularly limited. When two or more speed bumps are included in one group, for example, the processor 11 may average the coordinates (latitude and longitude) of the two or more speed bumps and specify the position of a representative speed bump as one speed bump. Additionally or alternatively, the processor 11 may regard the coordinates of two or more speed bumps as a distribution, calculate the median coordinates of the distribution to unify the two or more speed bumps into one speed bump, and specify the position of the unified speed bump. Additionally or alternatively, when two or more speed bumps are successively present within a predetermined range, for example, the processor 11 may calculate the average of coordinates of the two or more successive speed bumps to unify the two or more successive speed bumps into one speed bump.

After specifying the position of one speed bump for each group, the processor 11 specifies the vehicle speed information, brake operation information, and accelerator operation information which correspond to the specified speed bump. A clustering process can be exemplified as the method of specifying these information items. For example, the processor 11 extracts the speed bump passage information, which includes the position of the specified speed bump, from the database 20 and groups the extracted speed bump passage information for each information item other than the position of the speed bump. Then, the processor 11 specifies each information item for each group in order to store it in the storage device 30 as the driving knowledge.

For example, the processor 11 executes a clustering process on the vehicle speeds at the time point of passing over a speed bump and can thereby specify the vehicle speed at the time point of passing over the speed bump. The term "around a speed bump" refers, for example, to an area defined by a distance of 10 m frontward and rearward from the speed bump.

The processor 11 executes a clustering process on the vehicle speeds before and after a speed bump and can thereby specify the vehicle speed around the speed bump (e.g., in an area defined by a distance of 10 m frontward and rearward from the speed bump). Additionally or alternatively, for example, the processor 11 executes a clustering process on the brake operations before passing over a speed bump and can thereby specify the position at which the brake operation is performed before passing over the speed bump. Additionally or alternatively, for example, the processor 11 executes a clustering process on the accelerator operations after passing over a speed bump and can thereby specify the position at which the accelerator operation is performed after passing over the speed bump.

Although methods for the processor 11 to specify the vehicle speed information, the brake operation information, and the accelerator operation information are not particularly limited, a method of specifying the vehicle speed information at the time point of passing over a speed bump will be described as an example. For example, a set of vehicle speeds included in a plurality of speed bump passage information pieces may be averaged and specified as the vehicle speed information. Additionally or alternatively, a set of vehicle speeds may be regarded as a distribution, and the vehicle speed corresponding to the center of the distribution may be specified as the vehicle speed information. Additionally or alternatively, statistical processing for calculating the average, variance, standard deviation, etc. may be performed on the vehicle speed distribution, and when an outlier with respect to the average value exists, the speed bump passage information including the vehicle speed as the outlier may be preliminarily excluded before specifying the vehicle speed information.

After specifying the vehicle speed information, the brake operation information, and the accelerator operation information corresponding to one speed bump, the processor 11 associates the speed bump information with the map information 232. Specifically, the processor 11 associates the link information of a speed bump with the link information of the map information 232. For example, when a speed bump exists at a point several meters from the start position of a link, the processor 11 associates the positional information of the speed bump with the corresponding point on the link thereby to associate the speed bump information with the map information 232. This allows the map information 232 to include the position of the speed bump and the vehicle speed information, the brake operation, and the accelerator operation when passing over the speed bump which are associated with the road link. Then, the processor 11 stores the map information 232 associated with the speed bump information in the storage device 30.

On the assumption that that the speed bump information is applied as the driving knowledge to the driving technique for a vehicle that travels in an autonomous manner, the processor 11 may execute a selection process for the speed bump passage information before specifying the speed bump information. An example of selection criteria may be whether or not the vehicle is a vehicle that travels while maintaining a vehicle speed within a predetermined range with respect to the legal speed.

A vehicle that travels in an area without speed bumps at a vehicle speed not less than a predetermined threshold with respect to the legal speed may pass over a speed bump at a vehicle speed faster than the vehicle speed of average vehicles. On the basis of the viewpoint that it is not preferred to apply the driving technique for such a vehicle to the driving technique for a vehicle that travels in an autonomous manner, the processor 11 executes the selection process for the speed bump passage information.

For example, the processor 11 extracts all the vehicle IDs from the speed bump passage information grouped by a clustering process and acquires a travel history corresponding to each extracted vehicle ID from the database 20. Then, the processor 11 refers to the vehicle speed information included in the travel history and the position of a speed bump for each vehicle and specifies the vehicle speed in an area without speed bumps. When the specified vehicle speed is maintained within a predetermined range with respect to the legal speed on a road included in the database 20, the processor 11 determines that the driver driving the vehicle with the vehicle ID is a good driver. On the other hand, when the difference between the legal speed on a road included in the database 20 and the specified vehicle speed is not less than a predetermined vehicle speed, the processor 11 determines that the driver driving the vehicle with the vehicle ID is not a good driver. Then, the processor 11 preliminarily excludes the speed bump passage information including the corresponding vehicle ID before calculating the speed bump information. Methods of extracting the speed bump passage information associated with a good driver are not limited to the above method.

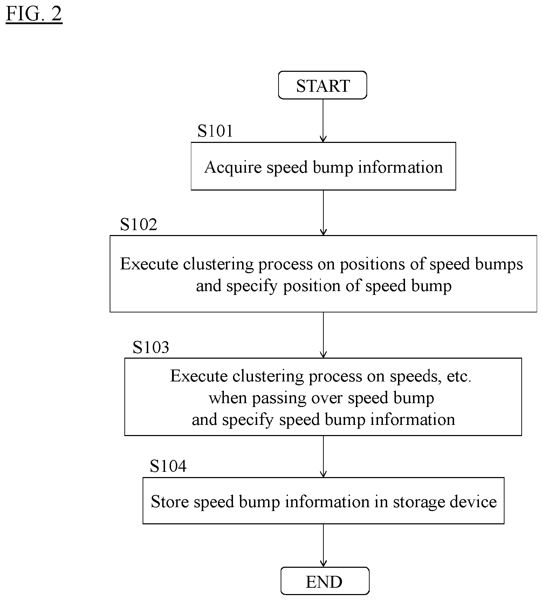

FIG. 2 is a flowchart illustrating a control procedure executed by the driving knowledge extraction system of the present embodiment. The control process of the driving knowledge extraction of the present embodiment will be described with reference to the flowchart of FIG. 2. The control process of the driving knowledge extraction described below is repeatedly executed at predetermined time intervals and for each lane.

In step S101, the processor 11 acquires the speed bump passage information including the same link information from among the speed bump passage information pieces stored in the database 20.

In step S102, the processor 11 executes a clustering process on the positions of speed bumps from the speed bump passage information acquired in step S101 and specifies the positions of one or more speed bumps existing on the same lane. For example, when two or more speed bumps exist, the processor 11 groups the speed bump passage information so that the positions of speed bumps fall within a predetermined distance. Then, the processor 11 calculates the average of coordinates (latitude and longitude) of the speed bumps for each group thereby to unify two or more speed bumps existing on the same lane into one speed bump.

In step S103, for each speed bump specified in step S102, the processor 11 executes a clustering process on the vehicle speeds or the like at the time point of passing over the speed bump to specify the speed bump information. For example, the processor 11 calculates an average of the vehicle speeds at the time point of passing over a speed bump, which is included in the speed bump passage information, to specify the vehicle speed information for the given speed bump. The processor 11 executes a clustering process also on the vehicle speeds, the brake operations, and the accelerator operations before and after passing over a speed bump and thereby specifies the vehicle speed information, the brake operation information, and the accelerator operation information before and after passing over the given speed bump.

In step S104, the processor 11 stores the positional information of the speed bump, which is specified in step S102, and the vehicle speed information for the speed bump, the brake operation information for the speed bump, and the accelerator operation information for the speed bump, which are specified in step S103, in the storage device 30 as the speed bump information, and the driving knowledge extraction process is thus concluded. The processor 11 stores the speed bump information in the storage device 30 so as to be associated with the map information 232.

As described above, the onboard apparatus 200 of the present embodiment includes the vehicle controller 210, the detection device 220 which detects the traveling state of the subject vehicle, the navigation device 230 which detects the traveling position of the subject vehicle, and the onboard communication device 260. The vehicle controller 210 acquires the traveling state of the subject vehicle from the detection device 220 and acquires the traveling position of the subject vehicle from the navigation device 230. Then, the vehicle controller 210 determines whether or not the subject vehicle has passed over a speed bump, on the basis of the traveling state of the subject vehicle and transmits the travel history, which includes the determination result and the traveling state of the subject vehicle, to the server 100 via the onboard communication device 260. In the server 100, the control device 10 specifies the positional information of the speed bump and the vehicle speed information of the vehicle when passing over the speed bump as the speed bump information from the travel history transmitted from the onboard apparatus 200. Then, the control device 10 stores the specified speed bump information in the storage device 30. This allows the storage device 30 to store the speed bump information with which appropriate driving can be performed in accordance with the form of the speed bump. As a result, the speed bump information stored in the storage device 30 can be used to perform appropriate driving in accordance with the form of the speed bump.

Moreover, in the server 100 of the present embodiment, the control device 10 stores the speed bump information in the storage device 30 so as to be associated with the map information 232. Through this operation, the information regarding a speed bump existing on the travel route of the subject vehicle can be preliminarily acquired by a simple process of referring to the map information 232.

Furthermore, in the server 100 of the present embodiment, the control device 10 acquires the travel history, which includes the speed bump passage information, twice or more from one vehicle. Through this operation, even when a road step temporarily occurring due to road construction or a fallen object temporarily present is erroneously determined as a speed bump at a specific date and time, the erroneous determination can be detected. As a result, the storage device 30 can store highly accurate speed bump information.

In addition, in the server 100 of the present embodiment, the control device 10 acquires travel histories including the speed bump passage information from a plurality of vehicles. This allows the storage device 30 to store the speed bump information as general-purpose data rather than as data depending on the driving method by a specific driver.

Moreover, in the onboard apparatus 200 of the present embodiment, the vehicle controller 210 detects a disturbance acting on the front and rear wheels of the subject vehicle and a disturbance acting on the right and left wheels of the subject vehicle on the basis of the detection result from the detection device 220. Then, the vehicle controller 210 determines whether or not the subject vehicle has passed over a speed bump, on the basis of the detected disturbance acting on the front and rear wheels and the detected disturbance acting on the right and left wheels. This reduces the determination of a road depression or a fallen object as a speed bump, and as a result, the storage device 30 can store highly accurate speed bump information.

Furthermore, in the onboard apparatus 200 of the present embodiment, the vehicle controller 210 determines whether or not the vehicle has passed over a speed bump candidate, on the basis of the disturbance acting on the front and rear wheels of the subject vehicle, and when a difference not less than a predetermined threshold occurs between respective disturbances acting on the right and left wheels, the vehicle controller 210 does not determine the speed bump candidate as a speed bump. This allows the storage device 30 to store highly accurate speed bump information as in the above effect.

In addition, the onboard apparatus 200 of the present embodiment includes the object detection device 240 which detects an object existing around the subject vehicle. The vehicle controller 210 determines whether or not the object detected by the object detection device 240 affects the vehicle speed of the subject vehicle, and only when an object that does not affect the vehicle speed of the subject vehicle exists around the subject vehicle, the vehicle controller 210 determines whether or not the subject vehicle has passed over a speed bump. Through this operation, the vehicle speed information specified on the server 100 side does not include the vehicle speed information affected by the object, and the storage device 30 can therefore store the vehicle speed information suitable for the driving for passing over the speed bump.

Moreover, in the onboard apparatus 200 of the present embodiment, the object detected by the detection device 220 is a preceding vehicle. Thus, the vehicle speed information specified on the server 100 side does not include the vehicle speed information affected by the preceding vehicle, and the storage device 30 can therefore store the vehicle speed information suitable for the driving for passing over a speed bump.

Furthermore, in the onboard apparatus 200 of the present embodiment, the vehicle speed sensor 222 of the detection device 220 detects the vehicle speed of the subject vehicle. When the vehicle speed of the subject vehicle is not more than a predetermined speed within a predetermined range in the longitudinal direction of the subject vehicle with reference to a point at which a disturbance acting on the front and rear wheels of the subject vehicle is detected, the vehicle controller 210 determines that the subject vehicle has passed over a speed bump. This makes it possible to distinguish between a speed bump that prompts deceleration and a step as a road joint or an obstacle that does not prompt deceleration.

In addition, in the onboard apparatus 200 of the present embodiment, the input device 250 detects the accelerator operation and brake operation of the subject vehicle. When the brake operation is performed within a predetermined range on the rear side of the subject vehicle with reference to a point at which a disturbance acting on the front and rear wheels of the subject vehicle is detected, or when the accelerator operation is performed within a predetermined range on the front side of the subject vehicle with reference to that point, the vehicle controller 210 determines that the subject vehicle has passed over a speed bump. This improves the accuracy of speed bump detection, and the storage device 30 can store the highly accurate speed bump information.

Moreover, in the present embodiment, the speed bump information includes accelerator operation information and brake operation information that are associated with the positional information of a speed bump. This allows the storage device 30 to store the information suitable for the actual driving operation for passing over a speed bump, as the speed bump information.

Furthermore, in the server 100 of the present embodiment, the control device 10 extracts the travel history of a vehicle that travels while maintaining a vehicle speed within a predetermined range with reference to the legal speed from among the travel histories of a plurality of vehicles and specifies the speed bump information on the basis of the extracted travel history. This allows the storage device 30 to store the driving operation performed by a good driver who observes the legal speed to pass over a speed bump, as the speed bump information.

In addition, in the server 100 of the present embodiment, when detecting a plurality of speed bumps within a predetermined range on the map, the control device 10 unifies the detected plurality of speed bumps into one speed bump thereby to specify the position of the speed bump. Through this operation, when two or more successive speed bumps are present, they can be treated as one speed bump, and complicated operations can be prevented when referring to the speed bump information.

### «Second Embodiment»

The following description is made for a vehicle travel control system 2 configured to control the travel of a vehicle using the speed bump information extracted by the driving knowledge extraction system 1 according to the above-described embodiment.

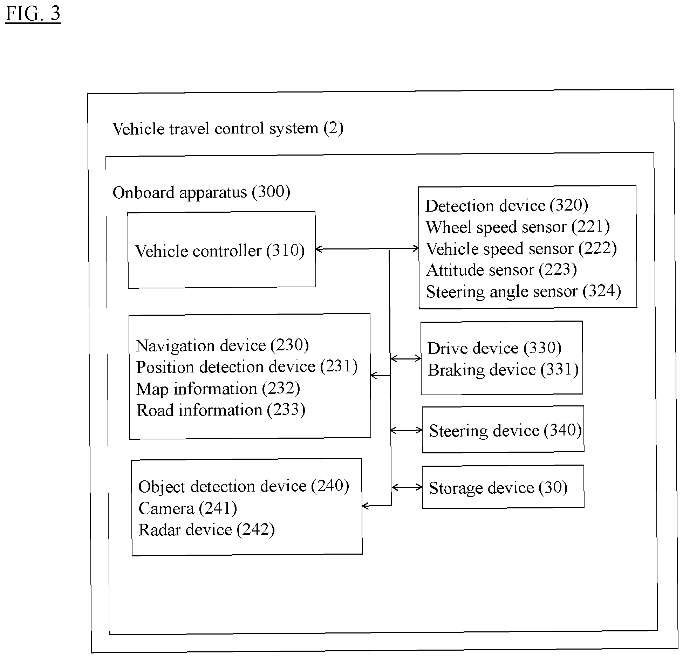

FIG. 3 is a diagram illustrating a block configuration of the vehicle travel control system 2. The vehicle travel control system 2 of the present embodiment includes an onboard apparatus 300.

The onboard apparatus 300 of the present embodiment has the same configuration as that of the onboard apparatus 200 of the above-described embodiment except that the onboard apparatus 300 includes a vehicle controller 310, a drive device 330, a braking device 331, a steering device 340, and a storage device 30 and does not include the input device 250 and the onboard communication device 260, so the description of the above-described embodiment using FIG. 1 will be borrowed herein.

The onboard apparatus 300 of the present embodiment includes a vehicle controller 310, a navigation device 230, an object detection device 240, a detection device 320, a drive device 330, a steering device 340, and a storage device 30. These devices which constitute the onboard apparatus 300 are connected to one another via a controller area network (CAN) or other onboard LAN to mutually exchange information. The vehicle controller 310 operates the drive device 330 and the steering device 340 on the basis of the speed bump information stored in the storage device 30 and the travel route calculated by the navigation device 230.

The onboard apparatus 300 of the present embodiment includes the detection device 320. The detection device 320 of the present embodiment has the same configuration as that of the detection device 220 of the above-described embodiment except that the detection device 320 includes a steering angle sensor 324, so the description of the above-described embodiment using FIG. 1 will be borrowed herein. The steering angle sensor 324 detects information such as a steering amount, a steering speed, and a steering acceleration and outputs the information to the vehicle controller 310.

The vehicle controller 310 of the present embodiment is an onboard computer such as an electronic control unit (ECU) and electronically controls the driving of the vehicle. Examples of the vehicle include an electric car, an engine vehicle, and a hybrid vehicle as described above.

The vehicle controller 310 of the present embodiment executes a route generation process of calculating a target speed at each point on the travel route and a target vehicle speed correction process of correcting the target vehicle speed.

The route generation process will be described first.

The vehicle controller 310 calculates the target vehicle speed at each point on the travel route calculated by the navigation device 230 as a speed profile. The vehicle speed profile refers to a target value of the vehicle speed at each position on the travel route. For example, first, the vehicle controller 310 corrects the travel route calculated by the navigation device 230, on the basis of the situation around the subject vehicle detected by the object detection device 240. Then, the vehicle controller 310 calculates the target vehicle speed at each point on the corrected travel route as a speed profile. Methods for the route generation process are not limited to the above-described method, and the vehicle controller 310 can appropriately use a route generation process known at the time of filing this application.

The target vehicle speed correction process will then be described.

The vehicle controller 310 corrects the speed profile generated by the route generation process, on the basis of the speed bump information stored in the storage device 30. For example, the vehicle controller 310 acquires the speed bump information from the storage device 30 for each lane included in the travel route. Then, the vehicle controller 310 compares, on the same link, the target vehicle speed calculated as the speed profile with the vehicle speed included in the speed bump information and determines whether or not to correct the target vehicle speed, in accordance with the comparison result. When the target vehicle speed is faster than the vehicle speed in the speed bump information, the vehicle controller 310 corrects the target vehicle speed to a speed not more than the vehicle speed in the speed bump information. On the other hand, when the target vehicle speed is slower than the vehicle speed in the speed bump information, the vehicle controller 310 does not correct the target vehicle speed. Thus, the target vehicle speed is set slower than the vehicle speed included in the speed bump information, and appropriate driving control can thereby be executed when passing over a speed bump.

The drive device 330 of the present embodiment includes a drive mechanism of the subject vehicle. The drive mechanism includes an electric motor and/or an internal-combustion engine as the travel driving sources, a power transmission device including a drive shaft and an automatic transmission that transmit the output from the travel driving source or sources to the driving wheels, a braking device 331 that brakes wheels, and other necessary components. The drive device 330 executes the travel control, which includes acceleration and deceleration of the vehicle, through generating control signals for these components of the drive mechanism on the basis of the input signals by an accelerator operation and a brake operation and the control signals acquired from the vehicle controller 310. The travel control including acceleration and deceleration of the vehicle can be performed in an autonomous manner by transmitting the control information to the drive device 330. In the case of a hybrid car, a ratio of the torque output to the electric motor and the torque output to the internal-combustion engine in accordance with the traveling state of the vehicle is also transmitted to the drive device 330.

The steering device 340 of the present embodiment includes a steering actuator. The steering actuator includes a motor and other necessary components attached to the steering column shaft. The steering device 340 executes control of varying the traveling direction of the vehicle on the basis of the control signals acquired from the vehicle controller 310 or the input signals by a steering operation. The vehicle controller 310 transmits the control information, which includes the steering amount, to the steering device 340 thereby to execute the steering control of the subject vehicle so that the subject vehicle travels along the travel route. Additionally or alternatively, the vehicle controller 310 may execute the control of the traveling direction of the vehicle by controlling the braking amount for each wheel of the vehicle. In this case, the vehicle controller 310 transmits the control information, which includes the braking amount for each wheel, to the braking device 331 thereby to execute the control of the traveling direction of the vehicle. Control of the drive device 330 and/or control of the steering device 340 may be performed in a completely autonomous manner or in a form of assisting with the driving operation (traveling operation) of the driver. Control of the drive device 330 and control of the steering device 340 can be suspended/canceled by an intervention operation of the driver.

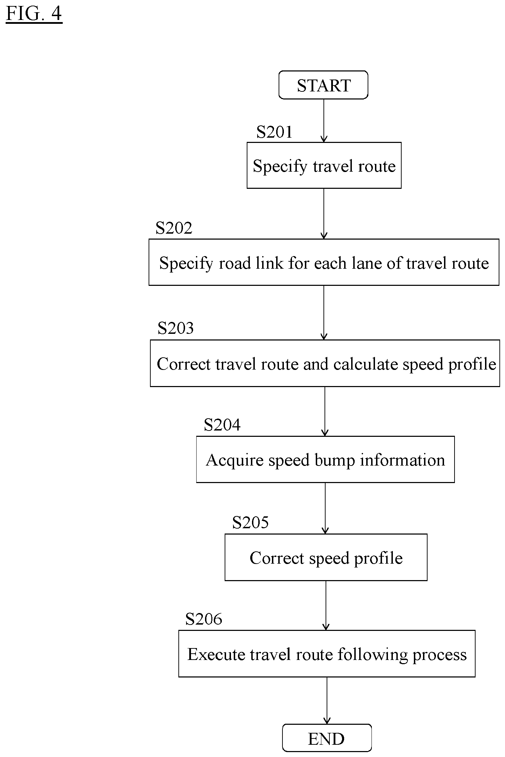

FIG. 4 is a flowchart illustrating a control procedure executed by the vehicle travel control system of the present embodiment. The control process of the vehicle travel control system of the present embodiment will be described with reference to the flowchart of FIG. 4. The control process of the vehicle travel control system described below is repeatedly executed at predetermined time intervals.

In step S201, the navigation device 230 specifies a travel route on which the subject vehicle travels, on the basis of the current position of the subject vehicle detected by the position detection device 231.

In step S202, the navigation device 230 refers to the road information 233 to specify a road link for each lane of the travel route on which the subject vehicle travels. The navigation device 230 transmits the travel route including the specified road link to the vehicle controller 310.

In step S203, the vehicle controller 310 corrects the travel route, which is specified in step S201, on the basis of the road link of the lane specified in step S202 and the situation around the subject vehicle detected by the object detection device 240 and calculates a vehicle speed profile on the corrected travel route.

In step S204, the vehicle controller 310 acquires the speed bump information stored in the storage device 30. In the present embodiment, the speed bump information includes at least the positional information of a speed bump and vehicle speed information corresponding to the positional information of the speed bump.

In step S205, the vehicle controller 310 corrects the vehicle speed profile, which is calculated in step S203, on the basis of the speed bump information acquired in step S204. For example, the vehicle controller 310 extracts speed bump information including the road link of the travel route from among the speed bump information pieces. Then, the vehicle controller 310 compares the vehicle speed included in the extracted speed bump information with the target vehicle speed in the vehicle speed profile to determine whether or not to correct the target vehicle speed. When the target vehicle speed is not less than the vehicle speed included in the speed bump information, the vehicle controller 310 corrects the target vehicle speed to a speed that is not more than the vehicle speed included in the speed bump information. On the other hand, when the target vehicle speed is slower than the vehicle speed included in the speed bump information, the vehicle controller 310 does not correct the target vehicle speed.

In step S206, the vehicle controller 310 executes a travel route following process on the basis of the travel route corrected in step S203 and the speed profile corrected in step S205. For example, the vehicle controller 310 generates a command for controlling the steering device 340 or the braking device 331 (e.g., a command for controlling the steering amount of the steering or the braking amount for each wheel) and a command for controlling the drive device 330 (e.g., a command for controlling the vehicle speed and/or acceleration). Then, the vehicle controller 310 outputs the generated commands to respective devices, and the traveling control process is thus concluded. Methods for the travel route following process executed by the vehicle controller 310 are not limited to the above-described method, and a travel route following process known at the time of filing this application can be used as appropriate.

As described above, the onboard apparatus 300 of the present embodiment includes the vehicle controller 310 which controls the driving of the vehicle in an autonomous manner and the storage device 30 which stores the speed bump information. The vehicle controller 310 calculates the target vehicle speed when passing over a speed bump on the basis of the speed bump information stored in the storage device 30 and controls the travel of the vehicle. This allows the vehicle traveling in an autonomous manner to preliminarily decelerate to an appropriate vehicle speed in accordance with the form of a speed bump when passing over the speed bump, and an appropriate travel can therefore be performed in accordance with the form of the speed bump.

For example, in the above-described first embodiment, the processor 11 of the server 100 may execute a speed bump update process of updating the speed bump information stored in the storage device 30. Specifically, when determining that the speed bump information stored in the storage device 30 is inaccurate information, the processor 11 deletes the determined speed bump information from the storage device 30.

For example, the processor 11 acquires the speed bump information, which is stored in the storage device 30, at predetermined intervals and also acquires travel histories of a plurality of vehicles that have passed most recently through a lane included in the acquired speed bump information. Then, the processor 11 performs a clustering process on the speed bump passage information included in the travel histories and detects the position of a speed bump. When the detected position of the speed bump does not match the position stored as the speed bump information or when the position of a speed bump is not detected, the processor 11 determines that the speed bump information is inaccurate. Then, the processor 11 deletes the corresponding speed bump information from the storage device 30. This allows the storage device 30 to store the speed bump information in accordance with the latest road condition even when a speed bump is removed due to road construction or the like.

In the above-described second embodiment, for example, the speed bump information stored in the storage device 30 is used to create a speed profile of the vehicle traveling in an autonomous manner, but methods of using the speed bump information are not limited to this. Examples of the method of using the speed bump information include use for driving assistance and use for estimation of the behavior of another vehicle.

Use of the speed bump information for driving assistance will be described. In the case of a vehicle that travels by the driver's manual driving, for example, the speed bump information may be applied to the navigation device 230. By referring to the speed bump information, the navigation device 230 may provide information that prompts the driver to preliminarily decelerate in accordance with the vehicle speed of the subject vehicle before the vehicle reaches a speed bump. In this case, the vehicle controller 310 compares the vehicle speed of the subject vehicle with the vehicle speed included in the speed bump information before the subject vehicle comes close to the speed bump. When the vehicle speed of the subject vehicle is faster than the vehicle speed included in the speed bump information, the vehicle controller 310 may prompt the driver to decelerate via an output device including a display and/or a speaker.

Use of the speed bump information for estimation of the behavior of another vehicle will then be described. In the case of a vehicle that travels in an autonomous manner, for example, the behavior of another vehicle may be estimated in accordance with the position of a speed bump included in the speed bump information and the vehicle speed information corresponding to that position. In this case, the vehicle controller 310 acquires the positional information of another vehicle from the object detection device 240, and when it is estimated that the other vehicle passes the position of a speed bump included in the speed bump information, the vehicle controller 310 determines that the other vehicle will decelerate. Then, with consideration for the behavior of the other vehicle to the speed bump, the travel route, the vehicle speed, and the like of the subject vehicle may be controlled.

In the present description, the apparatus for storing information for a vehicle according to the present invention is described by exemplifying the configuration of the server 100 and the vehicle controller 210 of the onboard apparatus 200 which constitute the driving knowledge extraction system 1, but the present invention is not limited to this. For example, the onboard apparatus 200 may include the control device 10, the database 20, and the storage device 30 which are included in the server 100.

In the present description, the travel control apparatus for a vehicle according to the present invention is described by exemplifying the onboard apparatus 300 which constitutes the vehicle travel control system 2, but the present invention is not limited to this. For example, the server may include the storage device 30, and the onboard apparatus 300 and the server may exchange the speed bump information through communication.

### [Description of Reference Numerals]

- 1: Driving knowledge extraction system
100 Server
10 Control device
11 Processor
20 Database
30 Storage device
40 Server communication device
200 Onboard apparatus
210 Vehicle controller
220 Detection device
221 Wheel speed sensor
222 Vehicle speed sensor
223 Attitude sensor
230 Navigation device
231 Position detection device
232 Map information
233 Road information
240 Object detection device
241 Camera
242 Radar device
250 Input device
251 Brake pedal
252 Accelerator pedal

## Claims

1. A method of storing information for a vehicle, the method using a processor (11) to execute information processing and store an execution result in a storage device (30), the method comprising:
acquiring a detection result from a sensor (220, 231) configured to detect a position of the vehicle and a traveling state of the vehicle;
detecting respective disturbances acting on front and rear wheels of the vehicle, on a basis of the traveling state of the vehicle;
detecting respective disturbances acting on right and left wheels of the vehicle, on the basis of the traveling state of the vehicle;
determining whether or not a physical object existing around the vehicle affects a vehicle speed of the vehicle, the physical object being detected by an object detection device;
only when a physical object that affects a vehicle speed of the vehicle does not exist around the vehicle, determining that the vehicle has passed over a speed bump;
acquiring a travel history of the vehicle, the travel history including a determination result as to that the vehicle has passed over the speed bump, travel route of the vehicle, vehicle speed of the vehicle, brake operation of the vehicle, and accelerator operation of the vehicle;
specifying, from the travel history, positional information of the speed bump as speed bump information; and
storing the speed bump information in the storage device (30) for update of the speed bump information in a server;
**characterized in that:**
the determining step includes determining whether or not the vehicle has passed over a candidate of the speed bump, on the basis of the respective disturbances acting on the front and rear wheels, and determining that the candidate of the speed bump is a speed bump and that the vehicle has passed over the speed bump, when a difference between the respective disturbances acting on the right and left wheels is not more than a predetermined threshold, the disturbance being an amount of change in rotation speed of the wheel; and
the specifying step includes specifying, from the travel history, vehicle speed information of the vehicle, brake operation information of the vehicle, and accelerator operation information of the vehicle when passing over the speed bump as speed bump information.

2. The method of storing information for a vehicle according to claim 1, comprising:
associating the speed bump information with map information (232).

3. The method of storing information for a vehicle according to claim 1 or 2, comprising:
acquiring the travel history twice or more from the vehicle; and
specifying the speed bump information from the travel history acquired twice or more.

4. The method of storing information for a vehicle according to any one of claims 1 to 3, comprising:
collecting determination travel histories from a plurality of vehicles; and
specifying the speed bump information from the collected travel histories of the plurality of vehicles.

5. The method of storing information for a vehicle according to any one of claims 1 to 4, comprising:
when the difference between the respective disturbances acting on the right and left wheels is more than the predetermined threshold, determining that the candidate of the speed bump is not a speed bump.

6. The method of storing information for a vehicle according to any one of claims 1 to 5, wherein the physical object is a preceding vehicle.

7. The method of storing information for a vehicle according to any one of claims 1 to 5, comprising:
when a vehicle speed of the vehicle is not more than a predetermined speed within a predetermined range in a longitudinal direction of the vehicle with reference to a point at which the respective disturbances acting on the front and rear wheels is detected, determining that the vehicle has passed over the speed bump.

8. The method of storing information for a vehicle according to any one of claims 1 to 6, comprising:
when a brake (251) operation is performed within a predetermined range on a rear side of the vehicle with reference to a point at which the disturbance acting on the front and rear wheels is detected or when an accelerator (252) operation is performed within a predetermined range on a front side of the vehicle with reference to the point, determining that the vehicle has passed over the speed bump.

9. The method of storing information for a vehicle according to any one of claims 1 to 7, wherein the speed bump information includes information on an accelerator (252) operation of the vehicle and information on a brake (251) operation of the vehicle corresponding to the positional information of the speed bump.

10. The method of storing information for a vehicle according to claim 4, comprising:
extracting the travel history of a vehicle that travels while maintaining a vehicle speed within a predetermined range with reference to a legal speed from among the travel histories of the plurality of vehicles; and
specifying the speed bump information on a basis of the extracted travel history.

11. The method of storing information for a vehicle according to any one of claims 2 to 9, comprising:
when detecting a plurality of speed bumps within a predetermined range on the map, unifying the plurality of speed bumps into one speed bump thereby to specify the positional information of the speed bump.

12. The method of storing information for a vehicle according to any one of claims 4 to 10, comprising:
collecting travel histories from a plurality of vehicles during a predetermined period after specifying the speed bump information;
extracting the travel history of a vehicle that has traveled at a position of the speed bump included in the speed bump information, from among the collected travel histories of the plurality of vehicles; and
when the speed bump information cannot be specified from the extracted travel history, canceling storage of the speed bump information.

13. A method of controlling travel of a vehicle, the method using a processor (11) to execute information processing and control the travel of the vehicle on a basis of an execution result, the method comprising:
acquiring a detection result from a sensor (220, 231) configured to detect a position of the vehicle and a traveling state of the vehicle;
detecting respective disturbances acting on front and rear wheels of the vehicle, on a basis of the traveling state of the vehicle;
detecting respective disturbances acting on right and left wheels of the vehicle, on the basis of the traveling state of the vehicle;
determining whether or not a physical object existing around the vehicle affects a vehicle speed of the vehicle;
only when a physical object that affects a vehicle speed of the vehicle does not exist around the vehicle, determining that the vehicle has passed over a speed bump;
acquiring a travel history of the vehicle, the travel history including a determination result as to that the vehicle has passed over the speed bump, travel route of the vehicle, vehicle speed of the vehicle, brake operation of the vehicle, and accelerator operation of the vehicle;
specifying, from the travel history, positional information of the speed bump as speed bump information; and
controlling the travel of the vehicle on a basis of the speed bump information;
**characterized in that:**
the determining step includes determining whether or not the vehicle has passed over a candidate of the speed bump, on the basis of the respective disturbances acting on the front and rear wheels, determining that the candidate of the speed bump is a speed bump and that the vehicle has passed over the speed bump, when a difference between the respective disturbances acting on the right and left wheels is not more than a predetermined threshold, the disturbance being an amount of change in rotation speed of the wheel; and
the specifying step includes specifying, from the travel history, vehicle speed information of the vehicle, brake operation information of the vehicle, and accelerator operation information of the vehicle when passing over the speed bump as speed bump information.

14. An apparatus for storing information for a vehicle, comprising:
a processor (11) configured to execute information processing; and
a storage device (30) configured to store an execution result of the processor (11),
the processor (11) operating to:
acquire a detection result from a sensor (220, 231) configured to detect a position of the vehicle and a traveling state of the vehicle;
detect respective disturbances acting on front and rear wheels of the vehicle, on a basis of the traveling state of the vehicle;
detect respective disturbances acting on right and left wheels of the vehicle, on the basis of the traveling state of the vehicle;
determining whether or not a physical object existing around the vehicle affects a vehicle speed of the vehicle;
only when a physical object that affects a vehicle speed of the vehicle does not exist around the vehicle, determine that the vehicle has passed over a speed bump;
acquire a travel history of the vehicle, the travel history including a determination result as to that the vehicle has passed over the speed bump, travel route of the vehicle,
vehicle speed of the vehicle, brake operation of the vehicle, and accelerator operation of the vehicle;
specify, from the travel history, positional information of the speed bump as speed bump information; and
store the speed bump information in the storage device (30);
**characterized in that** the processor (11) operates to:
determine whether or not the vehicle has passed over a candidate of the speed bump, on the basis of the respective disturbances acting on the front and rear wheels;
determine that the candidate of the speed bump is a speed bump and that the vehicle has passed over the speed bump when a difference between the respective disturbances acting on the right and left wheels is not more than a predetermined threshold, the disturbance being an amount of change in rotation speed of the wheel; and
specify, from the travel history, vehicle speed information of the vehicle, brake operation information of the vehicle, and accelerator operation information of the vehicle when passing over the speed bump as speed bump information.

## Patentansprüche

1. Verfahren zum Speichern von Informationen für ein Fahrzeug, wobei bei dem Verfahren ein Prozessor (11) eingesetzt wird, um Informationsverarbeitung auszuführen und ein Ausführungsergebnis in einer Speichervorrichtung (30) zu speichern, und das Verfahren umfasst:
Ermitteln eines Erfassungsergebnisses über einen Sensor (220, 231), der so konfiguriert ist, dass er eine Position des Fahrzeugs und einen Fahrzustand des Fahrzeugs erfasst;
Erfassen jeweiliger auf Vorder- und Hinterräder des Fahrzeugs wirkender Störungen auf Basis des Fahrzustandes des Fahrzeugs;
Erfassen jeweiliger auf rechte und linke Räder des Fahrzeugs wirkender Störungen auf Basis des Fahrzustandes des Fahrzeugs;
Feststellen, ob ein in einer Umgebung des Fahrzeugs vorhandenes physisches Objekt eine Fahrzeuggeschwindigkeit des Fahrzeugs beeinflusst, wobei das physische Objekt von einer Objekt-Erfassungsvorrichtung erfasst wird;
Feststellen, dass das Fahrzeug eine Bremsschwelle überfahren hat, nur dann, wenn kein physisches Objekt, das eine Fahrzeuggeschwindigkeit des Fahrzeugs beeinflusst, in der Umgebung des Fahrzeugs vorhanden ist;
Ermitteln eines Fahrtverlaufs des Fahrzeugs, wobei der Fahrtverlauf ein Feststellungsergebnis dahingehend, dass das Fahrzeug die Bremsschwelle überfahren hat, Fahrtroute des Fahrzeugs, Fahrzeuggeschwindigkeit des Fahrzeugs, Bremsbetätigung des Fahrzeugs und Gaspedalbetätigung des Fahrzeugs einschließt;
Definieren von Positions-Informationen der Bremsschwelle als Bremsschwellen-Informationen anhand des Fahrtverlaufs; sowie
Speichern der Bremsschwellen-Informationen in der Speichervorrichtung (30) für Aktualisierung der Bremsschwellen-Informationen in einem Server;
**dadurch gekennzeichnet, dass:**
der Schritt des Feststellens einschließt, dass auf Basis der jeweiligen auf die Vorder- und Hinterräder wirkenden Störungen festgestellt wird, ob das Fahrzeug einen Kandidaten für die Bremsschwelle überfahren hat, und festgestellt wird, dass der Kandidat für die Bremsschwelle eine Bremsschwelle ist und das Fahrzeug die Bremsschwelle überfahren hat, wenn ein Unterschied zwischen den jeweiligen auf die rechten und linken Räder wirkenden Störungen nicht über einem vorgegebenen Schwellenwert liegt, wobei die Störung ein Betrag von Änderung von Dreh-geschwindigkeit des Rades ist; und
der Schritt des Definierens einschließt, dass anhand des Fahrtverlaufs Fahrzeuggeschwindigkeits-Informationen des Fahrzeugs, Bremsbetätigungs-Informationen des Fahrzeugs sowie Gaspedal-betätigungs-Informationen des Fahrzeugs beim Überfahren der Bremsschwelle als Bremsschwellen-Informationen definiert werden.

2. Verfahren zum Speichern von Informationen für ein Fahrzeug nach Anspruch 1, das umfasst:
Zuordnen der Bremsschwellen-Informationen zu Karten-Informationen (232).

3. Verfahren zum Speichern von Informationen für ein Fahrzeug nach Anspruch 1 oder 2, das umfasst:
zweimaliges oder häufigeres Ermitteln des Fahrtverlaufs von dem Fahrzeug; und
Definieren der Bremsschwellen-Informationen anhand des zweimal oder häufiger ermittelten Fahrtverlaufs.

4. Verfahren zum Speichern von Informationen für ein Fahrzeug nach einem der Ansprüche 1 bis 3, das umfasst:
Sammeln von Bestimmungs-Fahrtverläufen von einer Vielzahl von Fahrzeugen; und
Definieren der Bremsschwellen-Informationen anhand der gesammelten Fahrtverläufe der Vielzahl von Fahrzeugen.

5. Verfahren zum Speichern von Informationen für ein Fahrzeug nach einem der Ansprüche 1 bis 4, das umfasst:
Feststellen, dass der Kandidat für die Bodenwelle keine Bodenwelle ist, wenn der Unterschied zwischen den jeweiligen auf die rechten und linken Räder wirkenden Störungen über dem vorgegebenen Schwellenwert liegt.

6. Verfahren zum Speichern von Informationen für ein Fahrzeug nach einem der Ansprüche 1 bis 5, wobei das physische Objekt ein vorausfahrendes Fahrzeug ist.

7. Verfahren zum Speichern von Informationen für ein Fahrzeug nach einem der Ansprüche 1 bis 5, das umfasst:
Feststellen, dass das Fahrzeug die Bremsschwelle überfahren hat, wenn eine Fahrzeuggeschwindigkeit des Fahrzeugs nicht über einer vorgegebenen Geschwindigkeit innerhalb eines vorgegebenen Bereiches in einer Längsrichtung des Fahrzeugs in Bezug auf einen Punkt liegt, an dem die jeweiligen auf die Vorder- und Hinterräder wirkenden Störungen erfasst werden.

8. Verfahren zum Speichern von Informationen für ein Fahrzeug nach einem der Ansprüche 1 bis 6, das umfasst:
Feststellen, dass das Fahrzeug die Bremsschwelle überfahren hat, wenn Betätigung einer Bremse (251) innerhalb eines vorgegebenen Bereiches an einer Rückseite des Fahrzeugs in Bezug auf einen Punkt durchgeführt wird, an dem die auf die Vorder- und Hinterräder wirkende Störung erfasst wird, oder wenn Betätigung eines Gaspedals (252) innerhalb eines vorgegebenen Bereiches an einer Vorderseite des Fahrzeugs in Bezug auf den Punkt durchgeführt wird.

9. Verfahren zum Speichern von Informationen für ein Fahrzeug nach einem der Ansprüche 1 bis 7, wobei die Bremsschwellen-Informationen Informationen über Betätigung eines Gaspedals (252) des Fahrzeugs und Informationen über Betätigung einer Bremse (251) des Fahrzeugs entsprechend den Positions-Informationen der Bremsschwelle enthalten.

10. Verfahren zum Speichern von Informationen für ein Fahrzeug nach Anspruch 4, das umfasst:
Extrahieren des Fahrtverlaufs eines Fahrzeugs, das unter Beibehaltung einer Fahrzeuggeschwindigkeit innerhalb eines vorgegebenen Bereiches in Bezug auf eine zulässige Geschwindigkeit fährt, aus den Fahrtverläufen der Vielzahl von Fahrzeugen; sowie
Definieren der Bremsschwellen-Informationen auf Basis des extrahierten Fahrtverlaufs.

11. Verfahren zum Speichern von Informationen für ein Fahrzeug nach einem der Ansprüche 2 bis 9, das umfasst:
Unifizieren der Vielzahl von Bremsschwellen zu einer Bremsschwelle bei Erfassen einer Vielzahl von Bremsschwellen innerhalb eines vorgegebenen Bereiches auf der Karte, um so die Positions-Informationen der Bremsschwelle zu definieren.

12. Verfahren zum Speichern von Informationen für ein Fahrzeug nach einem der Ansprüche 4 bis 10, das umfasst:
Sammeln von Fahrtverläufen von einer Vielzahl von Fahrzeugen während eines vorgegebenen Zeitraums nach Definieren der Bremsschwellen-Informationen;
Extrahieren des Fahrtverlaufs eines Fahrzeugs, das an einer Position der in den Bremsschwellen-Informationen enthaltenen Bremsschwelle gefahren ist, aus den gesammelten Fahrtverläufen der Vielzahl von Fahrzeugen; und
Abbrechen von Speichern der Bremsschwellen-Informationen, wenn die Bremsschwellen-Informationen nicht anhand des extrahierten Fahrtverlaufs ermittelt werden können.

13. Verfahren zum Steuern von Fahrt eines Fahrzeugs, wobei bei dem Verfahren ein Prozessor (11) eingesetzt wird, um Informationsverarbeitung auszuführen und Fahrt des Fahrzeugs auf Basis eines Ausführungsergebnisses zu steuern, wobei das Verfahren umfasst:
Ermitteln eines Erfassungsergebnisses über einen Sensor (220, 231), der so konfiguriert ist, dass er eine Position des Fahrzeugs und einen Fahrzustand des Fahrzeugs erfasst;
Erfassen jeweiliger auf Vorder- und Hinterräder des Fahrzeugs wirkender Störungen auf Basis des Fahrzustandes des Fahrzeugs;
Erfassen jeweiliger auf rechte und linke Räder des Fahrzeugs wirkender Störungen auf Basis des Fahrzustandes des Fahrzeugs;
Feststellen, ob ein in einer Umgebung des Fahrzeugs vorhandenes physisches Objekt eine Fahrzeuggeschwindigkeit des Fahrzeugs beeinflusst;
Feststellen, dass das Fahrzeug eine Bremsschwelle überfahren hat, nur dann, wenn kein physisches Objekt, das eine Fahrzeuggeschwindigkeit des Fahrzeugs beeinflusst, in der Umgebung des Fahrzeugs vorhanden ist;
Ermitteln eines Fahrtverlaufs des Fahrzeugs, wobei der Fahrtverlauf ein Feststellungsergebnis dahingehend, dass das Fahrzeug die Bremsschwelle überfahren hat, Fahrtroute des Fahrzeugs, Fahrzeuggeschwindigkeit des Fahrzeugs, Betätigung der Bremse des Fahrzeugs und Betätigung des Gaspedals des Fahrzeugs einschließt;
Definieren von Positions-Informationen der Bremsschwelle als Bremsschwellen-Informationen anhand des Fahrtverlaufs; sowie
Steuern der Fahrt des Fahrzeugs auf Basis der Bremsschwellen-Informationen;
**dadurch gekennzeichnet, dass:**
der Schritt des Feststellens einschließt, dass auf Basis der jeweiligen auf die Vorder- und Hinterräder wirkenden Störungen festgestellt wird, ob das Fahrzeug einen Kandidaten für die Bremsschwelle überfahren hat, festgestellt wird, dass der Kandidat für die Bremsschwelle eine Bremsschwelle ist und dass das Fahrzeug die Bremsschwelle überfahren hat, wenn ein Unterschied zwischen den jeweiligen auf die rechten und linken Räder wirkenden Störungen nicht über einem vorgegebenen Schwellenwert liegt, wobei die Störung ein Betrag von Änderung von Drehgeschwindigkeit des Rades ist; und
der Schritt des Definierens einschließt, dass anhand des Fahrtverlaufs Fahrzeuggeschwindigkeits-Informationen des Fahrzeugs, Bremsbetätigungs-Informationen des Fahrzeugs sowie Gaspedalbetätigungs-Informationen des Fahrzeugs beim Überfahren der Bremsschwelle als Bremsschwellen-Informationen anhand des Fahrtverlaufs definiert werden.

14. Vorrichtung zum Speichern von Informationen für ein Fahrzeug, die umfasst:
einen Prozessor (11), der zum Ausführen von Informationsverarbeitung konfiguriert ist; und
eine Speichervorrichtung (30), die zum Speichern eines Ausführungsergebnisses des Prozessors (11) konfiguriert ist,
wobei der Prozessor (11) in Funktion durchführt:
Ermitteln eines Erfassungsergebnisses über einen Sensor (220, 231), der so konfiguriert ist, dass er eine Position des Fahrzeugs und einen Fahrzustand des Fahrzeugs erfasst;
Erfassen jeweiliger auf Vorder- und Hinterräder des Fahrzeugs wirkender Störungen auf Basis des Fahrzustandes des Fahrzeugs;
Erfassen jeweiliger auf rechte und linke Räder des Fahrzeugs wirkender Störungen auf Basis des Fahrzustandes des Fahrzeugs;
Feststellen, ob ein in einer Umgebung des Fahrzeugs vorhandenes physisches Objekt eine Fahrzeuggeschwindigkeit des Fahrzeugs beeinflusst;
Feststellen, dass das Fahrzeug eine Bremsschwelle überfahren hat, nur dann, wenn kein physisches Objekt, das eine Fahrzeuggeschwindigkeit des Fahrzeugs beeinflusst, in der Umgebung des Fahrzeugs vorhanden ist;
Beziehen eines Fahrtverlaufs des Fahrzeugs, wobei der Fahrtverlauf ein Feststellungsergebnis dahingehend, dass das Fahrzeug die Bremsschwelle überfahren hat, Fahrtroute des Fahrzeugs, Fahrzeuggeschwindigkeit des Fahrzeugs, Bremsbetätigung des Fahrzeugs und Gaspedalbetätigung des Fahrzeugs einschließt;
Definieren von Positions-Informationen der Bremsschwelle als Bremsschwellen-Informationen anhand des Fahrtverlaufs; sowie
Speichern der Bremsschwellen-Informationen in der Speichervorrichtung (30);
**dadurch gekennzeichnet, dass** der Prozessor (11) in Funktion durchführt:
Feststellen, ob das Fahrzeug einen Kandidaten für die Bremsschwelle überfahren hat, auf Basis der jeweiligen auf die Vorder- und Hinterräder wirkenden Störungen;
Feststellen, dass der Kandidat für die Bremsschwelle eine Bremsschwelle ist und das Fahrzeug die Bremsschwelle überfahren hat, wenn ein Unterschied zwischen den jeweiligen auf die rechten und linken Räder wirkenden Störungen nicht über einem vorgegebenen Schwellenwert liegt, wobei die Störung ein Betrag von Änderung von Drehgeschwindigkeit des Rades ist; sowie
Definieren von Fahrzeuggeschwindigkeits-Informationen des Fahrzeugs, Bremsbetätigungs-Informationen des Fahrzeugs und Gaspedalbetätigungs-Informationen des Fahrzeugs beim Überfahren der Bremsschwelle als Bremsschwellen-Informationen anhand des Fahrtverlaufs.

## Revendications

1. Procédé de stockage d'informations pour un véhicule, le procédé utilisant un processeur (11) pour exécuter un traitement d'informations et stocker un résultat d'exécution dans un dispositif de stockage (30), le procédé comprenant :
acquérir un résultat de détection à partir d'un capteur (220, 231) configuré pour détecter une position du véhicule et un état de déplacement du véhicule ;
détecter des perturbations respectives agissant sur les roues avant et arrière du véhicule, sur la base de l'état de déplacement du véhicule ;
détecter des perturbations respectives agissant sur les roues droite et gauche du véhicule, sur la base de l'état de déplacement du véhicule ;
déterminer si un objet physique existant autour du véhicule affecte ou non une vitesse de véhicule du véhicule, l'objet physique étant détecté par un dispositif de détection d'objet ;
uniquement lorsqu'un objet physique qui affecte une vitesse de véhicule du véhicule n'existe pas autour du véhicule, déterminer que le véhicule est passé sur un ralentisseur ;
acquérir un historique de déplacement du véhicule, l'historique de déplacement comprenant un résultat de détermination indiquant que le véhicule est passé sur le ralentisseur, l'itinéraire de déplacement du véhicule, la vitesse de véhicule du véhicule, l'actionnement de frein du véhicule et l'actionnement d'accélérateur du véhicule ;
spécifier, à partir de l'historique de déplacement, des informations de position du ralentisseur en tant qu'informations de ralentisseur ; et
stocker les informations de ralentisseur dans le dispositif de stockage (30) pour la mise à jour des informations de ralentisseur dans un serveur ;
**caractérisé en ce que** :
l'étape de détermination consiste à déterminer si le véhicule est passé ou non sur un candidat du ralentisseur, sur la base des perturbations respectives agissant sur les roues avant et arrière, et à déterminer que le candidat du ralentisseur est un ralentisseur et que le véhicule est passé sur le ralentisseur, lorsqu'une différence entre les perturbations respectives agissant sur les roues droite et gauche n'est pas supérieure à un seuil prédéterminé, la perturbation étant une quantité de changement de vitesse de rotation de la roue ; et
l'étape de spécification consiste à spécifier, à partir de l'historique de déplacement, des informations de vitesse de véhicule du véhicule, des informations d'actionnement de frein du véhicule et des informations d'actionnement d'accélérateur du véhicule lors du passage sur le ralentisseur en tant qu'informations de ralentisseur.

2. Procédé de stockage d'informations pour un véhicule selon la revendication 1, comprenant :
associer les informations de ralentisseur à des informations cartographiques (232).

3. Procédé de stockage d'informations pour un véhicule selon la revendication 1 ou 2, comprenant :
acquérir l'historique de déplacement deux fois ou plus à partir du véhicule ; et
spécifier les informations de ralentisseur à partir de l'historique de déplacement acquis deux fois ou plus.

4. Procédé de stockage d'informations pour un véhicule selon l'une quelconque des revendications 1 à 3, comprenant :
collecter des historiques de déplacement à partir d'une pluralité de véhicules ; et
spécifier les informations de ralentisseur à partir des historiques de déplacement collectés de la pluralité de véhicules.

5. Procédé de stockage d'informations pour un véhicule selon l'une quelconque des revendications 1 à 4, comprenant :
lorsque la différence entre les perturbations respectives agissant sur les roues droite et gauche est supérieure au seuil prédéterminé, déterminer que le candidat du ralentisseur n'est pas un ralentisseur.

6. Procédé de stockage d'informations pour un véhicule selon l'une quelconque des revendications 1 à 5, dans lequel l'objet physique est un véhicule précédent.

7. Procédé de stockage d'informations pour un véhicule selon l'une quelconque des revendications 1 à 5, comprenant :
lorsqu'une vitesse de véhicule du véhicule n'est pas supérieure à une vitesse prédéterminée dans une plage prédéterminée dans une direction longitudinale du véhicule en référence à un point auquel les perturbations respectives agissant sur les roues avant et arrière sont détectées, déterminer que le véhicule est passé sur le ralentisseur.

8. Procédé de stockage d'informations pour un véhicule selon l'une quelconque des revendications 1 à 6, comprenant :
lorsqu'un actionnement de frein (251) est effectué dans une plage prédéterminée sur un côté arrière du véhicule en référence à un point auquel la perturbation agissant sur les roues avant et arrière est détectée ou lorsqu'un actionnement d'accélérateur (252) est effectué dans une plage prédéterminée sur un côté avant du véhicule en référence au point, déterminer que le véhicule est passé sur le ralentisseur.

9. Procédé de stockage d'informations pour un véhicule selon l'une quelconque des revendications 1 à 7, dans lequel les informations de ralentisseur comprennent des informations sur un actionnement d'accélérateur (252) du véhicule et des informations sur un actionnement de frein (251) du véhicule correspondant aux informations de position du ralentisseur.

10. Procédé de stockage d'informations pour un véhicule selon la revendication 4, comprenant :
extraire l'historique de déplacement d'un véhicule qui se déplace tout en maintenant une vitesse de véhicule dans une plage prédéterminée en référence à une vitesse légale parmi les historiques de déplacement de la pluralité de véhicules ; et
spécifier les informations de ralentisseur sur la base de l'historique de déplacement extrait.

11. Procédé de stockage d'informations pour un véhicule selon l'une quelconque des revendications 2 à 9, comprenant :
lors de la détection d'une pluralité de ralentisseurs dans une plage prédéterminée sur la carte, unifier la pluralité de ralentisseurs en un seul ralentisseur pour ainsi spécifier les informations de position du ralentisseur.

12. Procédé de stockage d'informations pour un véhicule selon l'une quelconque des revendications 4 à 10, comprenant :
collecter des historiques de déplacement d'une pluralité de véhicules pendant une période prédéterminée après avoir spécifié les informations de ralentisseur ;
extraire l'historique de déplacement d'un véhicule qui s'est déplacé à une position du ralentisseur inclus dans les informations de ralentisseur, parmi les historiques de déplacement collectés de la pluralité de véhicules ; et
lorsque les informations de ralentisseur ne peuvent pas être spécifiées à partir de l'historique de déplacement extrait, annuler le stockage des informations de ralentisseur.

13. Procédé de commande de déplacement d'un véhicule, le procédé utilisant un processeur (11) pour exécuter un traitement d'informations et commander le déplacement du véhicule sur la base d'un résultat d'exécution, le procédé comprenant :
acquérir un résultat de détection à partir d'un capteur (220, 231) configuré pour détecter une position du véhicule et un état de déplacement du véhicule ;
détecter des perturbations respectives agissant sur les roues avant et arrière du véhicule, sur la base de l'état de déplacement du véhicule ;
détecter des perturbations respectives agissant sur les roues droite et gauche du véhicule, sur la base de l'état de déplacement du véhicule ;
déterminer si un objet physique existant autour du véhicule affecte ou non une vitesse de véhicule du véhicule ;
uniquement lorsqu'un objet physique qui affecte une vitesse de véhicule du véhicule n'existe pas autour du véhicule, déterminer que le véhicule est passé sur un ralentisseur ;
acquérir un historique de déplacement du véhicule, l'historique de déplacement comprenant un résultat de détermination indiquant que le véhicule est passé sur le ralentisseur, l'itinéraire de déplacement du véhicule, la vitesse de véhicule du véhicule, l'actionnement de frein du véhicule et l'actionnement d'accélérateur du véhicule ;
spécifier, à partir de l'historique de déplacement, des informations de position du ralentisseur en tant qu'informations de ralentisseur ; et
commander le déplacement du véhicule sur la base des informations de ralentisseur ;
**caractérisé en ce que** :
l'étape de détermination consiste à déterminer si le véhicule est passé ou non sur un candidat du ralentisseur, sur la base des perturbations respectives agissant sur les roues avant et arrière, et à déterminer que le candidat du ralentisseur est un ralentisseur et que le véhicule est passé sur le ralentisseur, lorsqu'une différence entre les perturbations respectives agissant sur les roues droite et gauche n'est pas supérieure à un seuil prédéterminé, la perturbation étant une quantité de changement de vitesse de rotation de la roue ; et
l'étape de spécification consiste à spécifier, à partir de l'historique de déplacement, des informations de vitesse de véhicule du véhicule, des informations d'actionnement de frein du véhicule et des informations d'actionnement d'accélérateur du véhicule lors du passage sur le ralentisseur en tant qu'informations de ralentisseur.

14. Appareil de stockage d'informations pour un véhicule, comprenant :
un processeur (11) configuré pour exécuter un traitement d'informations ; et
un dispositif de stockage (30) configuré pour stocker un résultat d'exécution du processeur (11),
le processeur (11) fonctionnant pour :
acquérir un résultat de détection à partir d'un capteur (220, 231) configuré pour détecter une position du véhicule et un état de déplacement du véhicule ;
détecter des perturbations respectives agissant sur les roues avant et arrière du véhicule, sur la base de l'état de déplacement du véhicule ;
détecter des perturbations respectives agissant sur les roues droite et gauche du véhicule, sur la base de l'état de déplacement du véhicule ;
déterminer si un objet physique existant autour du véhicule affecte ou non une vitesse de véhicule du véhicule ;
uniquement lorsqu'un objet physique qui affecte une vitesse de véhicule du véhicule n'existe pas autour du véhicule, déterminer que le véhicule est passé sur un ralentisseur ;
acquérir un historique de déplacement du véhicule, l'historique de déplacement comprenant un résultat de détermination indiquant que le véhicule est passé sur le ralentisseur, l'itinéraire de déplacement du véhicule, la vitesse de véhicule du véhicule, l'actionnement de frein du véhicule et l'actionnement d'accélérateur du véhicule ;
spécifier, à partir de l'historique de déplacement, des informations de position du ralentisseur en tant qu'informations de ralentisseur ; et
stocker les informations de ralentisseur dans le dispositif de stockage (30) ;
**caractérisé en ce que** le processeur (11) fonctionne pour :
déterminer si le véhicule est passé ou non sur un candidat du ralentisseur, sur la base des perturbations respectives agissant sur les roues avant et arrière,
déterminer que le candidat du ralentisseur est un ralentisseur et que le véhicule est passé sur le ralentisseur lorsqu'une différence entre les perturbations respectives agissant sur les roues droite et gauche n'est pas supérieure à un seuil prédéterminé, la perturbation étant une quantité de changement de vitesse de rotation de la roue ; et
spécifier, à partir de l'historique de déplacement, des informations de vitesse de véhicule du véhicule, des informations d'actionnement de frein du véhicule et des informations d'actionnement d'accélérateur du véhicule lors du passage sur le ralentisseur en tant qu'informations de ralentisseur.
